# EUROPEAN PATENT APPLICATION

(11) **EP 4 357 659 A1**
(43) Date of publication of application: **24.04.2024**
(21) Application number: 22824642.7
(22) Date of filing: 30.03.2022
(51) Int. Cl.: F16L 59/065, E04B 1/76, E04B 1/80

(54) **METHOD FOR MANUFACTURING VACUUM INSULATION PANEL, AND VACUUM INSULATION PANEL**

(30) Priority: 15.06.2021 JP 2021099209
(71) Applicant: Yazaki Energy System Corporation, Minato-ku Tokyo 108-0075 (JP)
(72) Inventor: NAKAMURA Takuju, Hamamatsu-shi, Shizuoka 435-0015 (JP)
(74) Representative: Grünecker Patent- und Rechtsanwälte PartG mbB
(86) International application number: PCT/JP2022/016355
(87) International publication number: WO 2022/264646

(57) **Abstract**

In a vacuum insulation panel (1), a foam having open cells is accommodated as a core material (20) in a hollow body (10) having a hollow portion (H) formed therein. The hollow body (10) includes a first inner surface (11a) and a second inner surface (12a) that face each other with the hollow portion (H) interposed therebetween. The core material (20) includes a first surface (22a) facing the first inner surface (11a) and a second surface (22b) facing the second inner surface (12a). A method for manufacturing the vacuum insulation panel (1) includes an adhering step of adhering the first inner surface (11a) to the first surface (22a), and adhering the second inner surface (12a) to the second surface (22b).

## Description

### TECHNICAL FIELD

The present invention relates to a method for manufacturing a vacuum insulation panel and a vacuum insulation panel.

### BACKGROUND ART

In the related art, a vacuum insulation panel for a building is known in which a glass fiber is used as a core material, and the core material is packed with a resin film including an aluminum layer (see, for example,

Patent Literature 1). In addition, a vacuum insulation panel in which a glass fiber is used as a core material and packed with a stainless steel plate is also known (for example, see Patent Literature 2).

### CITATION LIST

### PATENT LITERATURE

Patent Literature 1: JPS58-127085A
Patent Literature 2: JP2010-281387A

### SUMMARY OF INVENTION

### TECHNICAL PROBLEM

However, the vacuum insulation panels described in Patent Literatures 1 and 2 do not satisfy a wind pressure resistance performance required as a building material.

The invention has been made to solve such a problem, and an object thereof is to provide a method for manufacturing a vacuum insulation panel and a vacuum insulation panel that can improve a wind pressure resistance performance.

### SOLUTION TO PROBLEM

A method for manufacturing a vacuum insulation panel according to the invention is a method for manufacturing a vacuum insulation panel in which a foam having open cells is accommodated as a core material in a hollow body having a hollow portion formed therein, in which
the hollow body includes a first inner surface and a second inner surface that face each other with the hollow portion interposed therebetween,
the core material includes a first surface facing the first inner surface and a second surface facing the second inner surface, and
the method includes:
   an adhering step of adhering the first inner surface to the first surface, and adhering the second inner surface to the second surface.

A vacuum insulation panel according to the invention is a vacuum insulation panel in which a foam having open cells is accommodated as a core material in a hollow body having a hollow portion formed therein, in which
the hollow body includes a first inner surface and a second inner surface that face each other with the hollow portion interposed therebetween,
the core material includes a first surface facing the first inner surface and a second surface facing the second inner surface, and
the first inner surface is adhered to the first surface, and the second inner surface is adhered to the second surface.

### ADVANTAGEOUS EFFECTS OF INVENTION

According to the invention, it is possible to provide a method for manufacturing a vacuum insulation panel and a vacuum insulation panel that can improve a wind pressure resistance performance.

### BRIEF DESCRIPTION OF DRAWINGS

[FIG. 1A] FIGS. 1A to 1C are a configuration diagram showing an example of a vacuum insulation panel according to a first embodiment of the invention. FIG. 1A is a perspective view of the configuration diagram.
[FIG. 1B] FIG. 1B is a cross-sectional view of the configuration diagram.
[FIG. 1C] FIG. 1C is a partially enlarged view of FIG. 1B.
[FIG. 2A] FIGS. 2A to 2E are a process diagram showing a method for manufacturing the vacuum insulation panel according to the first embodiment. FIG. 2A shows a preparing step of the process diagram.
[FIG. 2B] FIG. 2B shows a hollow body manufacturing step (hollow body preparing step) of the process diagram.
[FIG. 2C] FIG. 2C shows an adhesive layer forming step of the process diagram.
[FIG. 2D] FIG. 2D shows a core material charging step of the process diagram.
[FIG. 2E] FIG. 2E shows an impregnating step of the process diagram.
[FIG. 3A] FIGS. 3A to 3D are a process diagram showing the method for manufacturing the vacuum insulation panel according to the first embodiment. FIG. 3A shows an adhesive surface forming step of the process diagram.
[FIG. 3B] FIG. 3B shows a first heating step (adhering and solidifying step) of the process diagram.
[FIG. 3C] FIG. 3C shows a second heating step (adhering and solidifying step) of the process diagram.
[FIG. 3D] FIG. 3D shows a heating and evacuating step (adhering and solidifying step, sealing step) of the process diagram.
[FIG. 4A] FIGS. 4A and 4B are a configuration diagram showing an example of a vacuum insulation panel according to a second embodiment. FIG. 4A is a perspective view of the configuration diagram.
[FIG. 4B] FIG. 4B is an exploded perspective view of the configuration diagram.
[FIG. 5A] FIGS. 5A to 5D are a process diagram showing a method for manufacturing the vacuum insulation panel according to the second embodiment. FIG. 5A shows a preparing step of the process diagram.
[FIG. 5B] FIG. 5B shows an impregnating step of the process diagram.
[FIG. 5C] FIG. 5C shows an adhesive surface forming step of the process diagram.
[FIG. 5D] FIG. 5D shows a heating step (solidifying step) of the process diagram.
[FIG. 6A] FIGS. 6A to 6C are a process diagram showing the method for manufacturing the vacuum insulation panel according to the second embodiment. FIG. 6A shows an adhesive layer forming step of the process diagram.
[FIG. 6B] FIG. 6B shows a hollow body forming step of the process diagram.
[FIG. 6C] FIG. 6C shows a heating and evacuating step (adhering step, sealing step) of the process diagram.
[FIG. 7A] FIGS. 7A to 7D are a process diagram showing a method for manufacturing a vacuum insulation panel according to a third embodiment. FIG. 7A shows a preparing step of the process diagram.
[FIG. 7B] FIG. 7B shows a hollow body manufacturing step (hollow body preparing step) of the process diagram.
[FIG. 7C] FIG. 7C shows a core material charging step of the process diagram.
[FIG. 7D] FIG. 7D shows an impregnating step of the process diagram.
[FIG. 8A] FIGS. 8A to 8D are a process diagram showing the method for manufacturing the vacuum insulation panel according to the third embodiment. FIG. 8A shows an adhesive surface forming step of the process diagram.
[FIG. 8B] FIG. 8B shows a first heating step (adhering and solidifying step) of the process diagram.
[FIG. 8C] FIG. 8C shows a second heating step (adhering and solidifying step) of the process diagram.
[FIG. 8D] FIG. 8D shows a heating and evacuating step (adhering and solidifying step, sealing step) of the process diagram.
[FIG. 9A] FIGS. 9A to 9E are a process diagram showing a method for manufacturing a vacuum insulation panel according to a fourth embodiment. FIG. 9A shows a partial charging step and an adhering step of the process diagram.
[FIG. 9B] FIG. 9B shows a remaining charging step and an impregnating step of the process diagram.
[FIG. 9C] FIG. 9C shows a solidifying step of the process diagram.
[FIG. 9D] FIG. 9D shows a moisture absorbing material charging step of the process diagram.
[FIG. 9E] FIG. 9E shows an evacuating step (sealing step) of the process diagram.

### DESCRIPTION OF EMBODIMENTS

Hereinafter, the invention will be described with reference to preferred embodiments. The invention is not limited to the embodiments to be described below, and the embodiments can be appropriately modified without departing from the scope of the invention. In addition, in the embodiments to be described below, although there are portions in which illustration and description of a part of the configuration are omitted, it is needless to say that a publicly known or well-known technique is appropriately applied to the details of the omitted technique within a range in which no contradiction with the contents to be described below occurs.

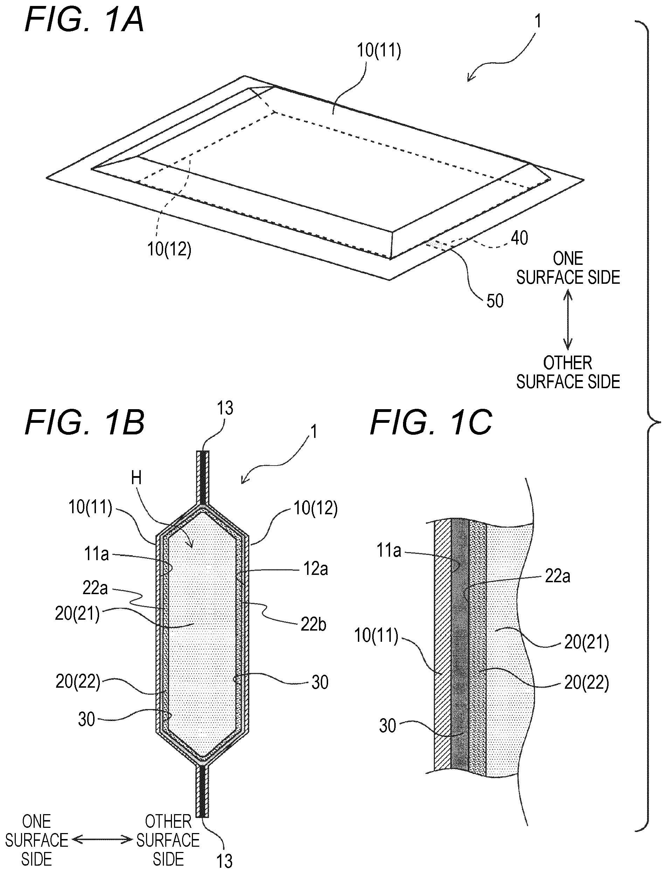

FIGS. 1A to 1C are a configuration diagram showing an example of a vacuum insulation panel according to a first embodiment of the invention, in which FIG. 1A is a perspective view, FIG. 1B is a cross-sectional view, and FIG. 1C is a partially enlarged view of FIG. 1B. A vacuum insulation panel 1 shown in FIGS. 1A to 1C includes a hollow body 10 and a core material 20 accommodated inside the hollow body 10.

As shown in FIGS. 1A and 1B, the hollow body 10 has a hollow portion H formed therein by processing a plurality of (two) metal plates 11 and 12. Each of the metal plates 11 and 12 has heat resistance at least not less than an extent that can withstand flame at 781°C for 20 minutes, that is, at least does not dissolve in flame at 781°C for 20 minutes or more. Each of the metal plates 11 and 12 preferably has heat resistance not less than an extent that can withstand flame at 843° C for 30 minutes, and more preferably has heat resistance (heat resistance without dissolving) not less than an extent that can withstand flame at 902°C for 45 minutes. Each of the metal plates 11 and 12 is made of, for example, stainless steel. Each of the metal plates 11 and 12 is processed to have a recess.

In the hollow body 10, the metal plates 11 and 12 are combined such that the recesses of the metal plates 11 and 12 match with each other, and are integrated with, via a joint portion 13, portions other than the recesses, that is, portions other than a communication port 40 to be described later, to form a hollow portion H. In other words, the hollow portion H is formed in the hollow body 10 by sealing outer peripheries of the metal plates 11 and 12 via the joint portion 13. In the hollow body 10, surfaces of the metal plates 11 and 12 facing the hollow portion H are examples of a first inner surface and a second inner surface that face each other with the hollow portion H interposed therebetween. The joint portion 13 is formed by seam welding or diffusion joining.

The core material 20 is formed by solidifying a foam having open cells. The core material 20 is made of, for example, an inorganic material, and has a thickness of, for example, several centimeters or more in the present embodiment. Similar to the hollow body 10, the core material 20 has heat resistance at least not less than an extent that can withstand flame at 781°C for 20 minutes, that is, does not cause combustion shrinkage or generate an outgas for at least 20 minutes or more with respect to flame at 781°C. The core material 20 is made of any of, for example, foamed glass, perlite powder, vermiculite, fumed silica, diatomaceous earth, and calcium silicate. The core material 20 preferably extends to every corner in the hollow portion H.

When the vacuum insulation panel 1 is used, for example, for a building having a required life of about 50 years, it is preferable to adopt the core material 20 that does not decompose and deteriorate for 50 years and does not generate an outgas. The core material 20 has a specific gravity of 0.7 or less, preferably 0.5 or less, and more preferably 0.2 or less due to weight restrictions for the building.

The hollow portion H of the vacuum insulation panel 1 according to the first embodiment is evacuated. Here, since the core material 20 in the hollow portion H forms open cells, inside of the open cells is evacuated by evacuation to exhibit a heat insulation property.

Here, a vacuum insulation panel in the related art does not satisfy a wind pressure resistance performance required as a building material. A wind pressure caused by a typhoon or the like with a wind speed of 60 m/s is about 2000 Pa (= 2000 N/m²), and the building material generally needs to withstand this scale of wind pressure. When considering an outer wall panel that has a width of 2 m and a height of 1 m and extends between columns standing at an interval of 2 m, a bending moment applied to the outer wall panel by the wind pressure is 1/8 × (2000 (N/m²) × 2 (m)²) = 1000 Nm at a central portion of the panel. It is assumed that the panel is a sandwich panel constituted by a core material that does not bear strength and stainless steel face plates on an indoor side and an outdoor side that bear the strength. In this case, in order to reduce, within a fatigue limit, stress applied to the stainless steel plates by the wind pressure, when the stress is reduced to about half of the 0.2% proof stress, that is, about 100 N/mm², a section modulus of the panel needs to be about 1000 (Nm)/100 (N/mm²) = 10000 mm³. The section modulus requires a thickness of 7.7 mm for a single stainless steel plate, and requires a thickness of 5.5 mm for each of two stainless steel plates that are not adhered to each other, and thus the vacuum insulation panel is not practical as a building material. A vacuum insulation panel using a resin film as a surface material requires a thickness several times greater than that due to a difference in fatigue limit, which cannot be achieved in practice.

Therefore, in the present embodiment, the vacuum insulation panel 1 includes an adhesive layer 30 as shown in FIGS. 1B and 1C. Further, in the vacuum insulation panel 1, a first inner surface 11a and a second inner surface 12a, which are inside surfaces of the hollow body 10 on one surface side of the panel and the other surface side of the panel, respectively, and a first surface 22a on one surface side of the panel and a second surface 22b on the other surface side of the panel of the core material 20 are adhered to one another via the adhesive layer 30. The first inner surface 11a is a surface of the metal plate 11 that faces the hollow portion H, and the second inner surface 12a is a surface of the metal plate 12 that faces the hollow portion H. The first surface 22a is a portion of a surface portion 22 of the core material 20 that faces the first inner surface 11a, and the second surface 22b is a portion of the surface portion 22 of the core material 20 that faces the second inner surface 12a. In the example shown in FIG. 1B, entire inside surfaces of the hollow body 10, that is, the entire first inner surface 11a and the entire second inner surface 12a, and the entire surface portion 22 of the core material 20, that is, the entire first surface 22a and the entire second surface 22b are adhered to one another via only the adhesive layer 30. The adhesive layer 30 is formed by applying an adhesive or the like. Thus, by providing the adhesive layer 30, the metal plates 11 and 12 and the core material 20 are integrated, a wind pressure resistance performance equivalent to that of a single thick plate can be obtained, and a high section modulus can be achieved, that is, an improvement in wind pressure resistance performance can be achieved. In the present disclosure, the one surface side of the panel and the other panel surface side of the panel may be simply referred to as one surface side and the other surface side (see FIGS. 1A and 1B).

Specifically, it is assumed that the vacuum insulation panel 1 has a width of 2 m, a height of 1 m, and a thickness of 50 mm, a thickness of each stainless steel plate constituting the metal plates 11 and 12 is t (mm), and the metal plates 11 and 12 and the core material 20 are firmly adhered and integrated as described above. A section modulus of the vacuum insulation panel 1 is calculated by 1/6 × 1000 (mm) × {50 (mm)² - (50 (mm) - 2t)²}, and a necessary section modulus (10000 mm³) can be obtained at t = 0.3 mm or more. By calculating in the same manner, if the thickness of the vacuum insulation panel 1 is 30 mm, the necessary section modulus can be obtained at t=0.5 mm or more, and if the thickness of the panel is 100 mm, the necessary section modulus can be obtained at t = 0.15 mm or more. That is, in order to use the vacuum insulation panel 1 as an outer wall material that can withstand the wind pressure, it is essential that a panel surface material has strength equivalent to that of a thin stainless steel plate, and that the panel surface material is strongly adhered and integrated with the core material 20 to have a large section modulus. The surface material of the sandwich panel preferably has a fatigue limit of 50 N/mm² or more, and more preferably has a fatigue limit of about 100 N/mm² as in the above-described stainless steel.

Here, in order to have the large section modulus as described above, 50% or more, more preferably 80% or more, and even more preferably 90% or more of the entire surface of the core material 20 on one surface side of the panel is preferably adhered to the inside surface of the hollow body 10 on one surface side of the panel. The same applies to the other surface side.

As the adhesive, a water glass is preferably used. This is because, by adopting the water glass, it is possible to provide a sufficient amount of adhesive only in a contact portion between the inside surfaces of the hollow body 10 and the core material 20 and firmly adhere the inside surfaces of the hollow body 10 and the core material 20 to one another while reducing a weight as much as possible so that thermal conductivity of the core material 20 is reduced.

In addition, a density of the core material 20 according to the present embodiment in the surface portion 22 is preferably higher than a density in a central portion 21. This is because adhesive strength between the hollow body 10 and the core material 20 via the adhesive layer 30 can be increased by increasing the density in the surface portion 22. The surface portion 22 is a portion of the core material 20 facing the hollow portion H, and the central portion 21 is a portion of the core material 20 other than the surface portion 22.

As shown in FIG. 1A, the hollow body 10 according to the present embodiment preferably includes a communication port 40 through which the hollow portion H is communicated with an outside, and a substance 50 that seals the communication port 40 and has a melting point of 200°C or higher and 600°C or lower. Examples of the substance 50 include low-melting-point metal such as solder, and low-melting-point glass. The substance 50 melts at the time of fire, and air is drawn into the hollow portion H. Hereinafter, an advantage of drawing air into the hollow portion H at the time of fire will be described. At the time of fire, even when the core material 20 has heat resistance, the core material 20 may be slightly softened under a high-temperature environment. When the hollow body 10 encounters a heating condition such as fire while the inside thereof is evacuated, since atmospheric pressure is continuously received through the metal plates 11 and 12, the vacuum insulation panel 1 may shrink more than expected. However, by drawing air into the hollow portion H at the time of fire, it is possible to prevent the vacuum insulation panel 1 from shrinking more than expected.

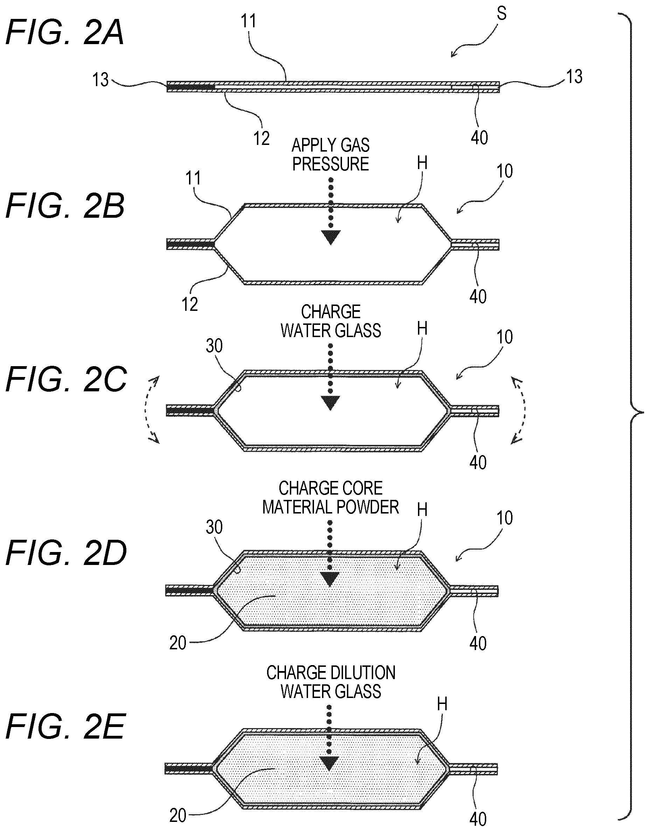

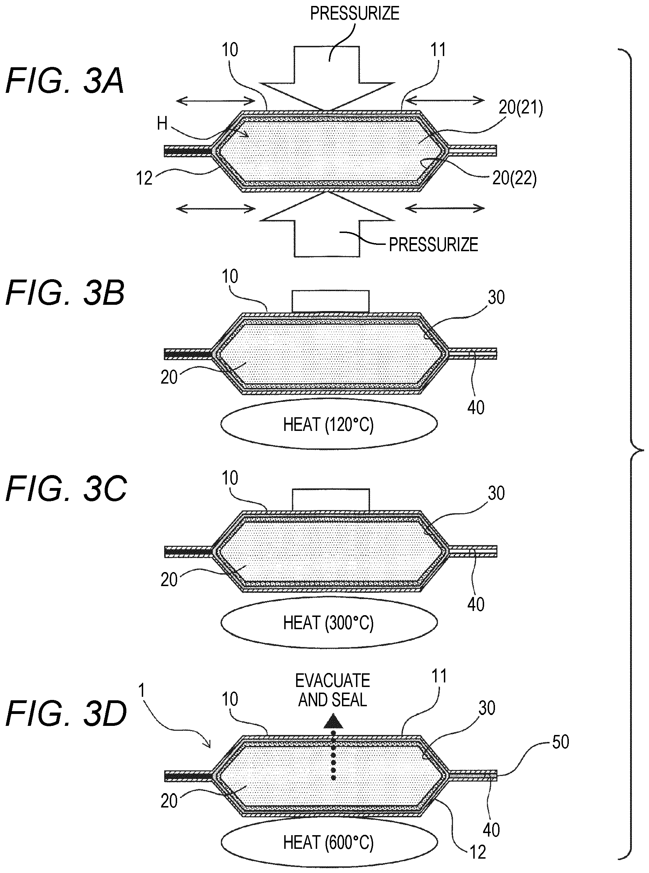

FIGS. 2A to 2E and FIGS. 3A to 3D are process diagrams showing a method for manufacturing the vacuum insulation panel 1 according to the first embodiment. FIG. 2A shows a preparing step, FIG. 2B shows a hollow body manufacturing step (hollow body preparing step), FIG. 2C shows an adhesive layer forming step, FIG. 2D shows a core material charging step, and FIG. 2E shows an impregnating step. FIG. 3A shows an adhesive surface forming step, FIG. 3B shows a first heating step (adhering and solidifying step), FIG. 3C shows a second heating step (adhering and solidifying step), and FIG. 3D shows a heating and evacuating step (adhering and solidifying step, sealing step).

First, in the preparing step shown in FIG. 2A, the metal plates 11 and 12 each made of, for example, stainless steel having a plate thickness of 0.1 mm or more and 2.0 mm or less are prepared, and the joint portion 13 is formed by seam welding or diffusion joining. Accordingly, a flat plate-shaped stacked body S in which the metal plates 11 and 12 are integrated via the joint portion 13 is obtained. In this step, a part of the stacked body S is not seam welded or the like, and the stacked body S including the communication port 40 is obtained.

Next, in the hollow body manufacturing step shown in FIG. 2B, the flat plate-shaped stacked body S is inserted into a mold (not shown), and a gas such as argon is fed into a gap between the metal plates 11 and 12 through the communication port 40. By applying such a gas pressure, an internal space between the metal plates 11 and 12 is expanded, and the hollow body 10 including the hollow portion H shown in FIG. 2B is obtained. The mold has a mold structure in which the hollow body 10 having a shape shown in FIG. 2B is obtained. It is preferable that the inside of the mold is heated such that the metal plates 11 and 12 are easily softened and deformed. The gas pressure may be applied by continuously feeding a gas such as argon, or may be applied by temporarily closing the communication port 40 after a predetermined amount of gas such as argon is fed.

Next, in the adhesive layer forming step shown in FIG. 2C, the water glass is charged into the hollow portion H through the communication port 40. The water glass is an example of a liquid for forming the adhesive layer 30. In this step, the hollow body 10 is rotated, and the water glass is applied to the entire inside surfaces of the hollow body 10. Accordingly, the adhesive layer 30 is formed.

Thereafter, in the core material charging step shown in FIG. 2D, a powder of the foamed core material 20 is charged, through the communication port 40, into the hollow portion H of the hollow body 10 on which the adhesive layer 30 is formed. Next, in the impregnating step shown in FIG. 2E, a dilution water glass diluted more than the water glass used in the adhesive layer forming step, for example, diluted 30 times, is charged into the hollow portion H through the communication port 40, and the powder of the core material 20 is impregnated with the dilution water glass.

Next, in the adhesive surface forming step illustrated in FIG. 3A, the hollow body 10 is vibrated in a state where the metal plates 11 and 12 are pressurized toward the hollow portion H. Accordingly, a portion of the core material 20 in the hollow portion H that comes into contact with the inside surface of the hollow body 10 is pulverized. As a result, the density of the core material 20 in the surface portion 22 is higher than that in the central portion 21, and the surface portion 22 easily functions as an adhesive surface.

Thereafter, by a series of steps shown in FIGS. 3B to 3D, the core material 20 is solidified, adhesion by the adhesive layer 30, that is, adhesion by the water glass is performed, and evacuation is performed and the communication port 40 is sealed.

First, in the first heating step shown in FIG. 3B, the hollow body 10 accommodating the core material 20 is heated at a first temperature (for example, 120°C) for a first predetermined time, for example, three days. Accordingly, moisture of the dilution water glass diluted 30 times and moisture of the water glass forming the adhesive layer 30 and applied to the inside surfaces of the hollow body 10 are vaporized and released to an outside through the communication port 40. In the first heating step, a large amount of moisture is released.

Next, in the second heating step shown in FIG. 3C, the hollow body 10 accommodating the core material 20 is heated at a second temperature for a second predetermined time. The second temperature is higher than the first temperature and is, for example, 300°C. The second predetermined time is shorter than the first predetermined time and is, for example, one day. By this step, the moisture of the dilution water glass and the moisture of the water glass are also vaporized and released to the outside through the communication port 40. In this step, the temperature also may be a temperature at which the water glass melts.

Here, a heating temperature (first temperature) and a heating time (first predetermined temperature) in the first heating step, and a heating temperature (second temperature) and a heating time (second predetermined temperature) in the second heating step are preferably set such that the core material 20 does not crack, that is, the moisture is slowly removed. Before these steps, the core material 20 is impregnated with the dilution water glass. For this reason, if water is allowed to be removed at a higher temperature for a shorter time, steam is generated at once while the core material 20 is solidified, and the core material 20 is broken. In this case, even when the core material 20 and the metal plates 11 and 12 are adhered to one another, the inner core material 20 is broken, and the vacuum insulation panel 1 is difficult to act like a thick plate. Therefore, in the first and second heating steps, the heating temperature and the heating time are optimized to prevent the core material 20 from being cracked.

Further, in the first heating step and the second heating step, heating is performed after the hollow body 10 is pressurized from the outside by, for example, placing a weight on the hollow body 10. This is because it is possible to prevent a situation in which the hollow portion H is pressurized by the steam generated during heating, the metal plates 11 and 12 are pressed and widened and the shapes thereof cannot be maintained.

Thereafter, in the heating and evacuating step shown in FIG. 3D, heating is performed at a third temperature for a third predetermined time, and evacuation is performed at the same time. The third temperature is higher than the second temperature and is, for example, 600°C. The third predetermined time is shorter than the second predetermined time and is, for example, 6 hours. As a result, moisture adhering to the core material 20 with a nano-level thickness can be removed, and carbon dioxide chemically bonded to the core material 20 can be removed. Here, when the vacuum insulation panel 1 is used for a building material, it is necessary to maintain a heat insulation performance for nearly 50 years, for example. On the other hand, a normal core material tends to generate an outgas when used for a long period of time, resulting in a decrease in heat insulation property. However, by removing the moisture adhering to the core material 20 with a nano-level thickness or the carbon dioxide chemically bonded as in this step, it is possible to provide the vacuum insulation panel 1 which can prevent the generation of the outgas and maintain a high heat insulation property for a longer period of time.

After performing heating and evacuation, the communication port 40 is sealed by the substance 50 having a melting point of 200°C or higher and 600°C or lower. The sealing may be performed after waiting until a temperature of the hollow body 10 or the like having a high temperature by heating at, for example, 600°C is lower than the melting point of the substance 50.

Further, at the end of this step, the inside surfaces of the hollow body 10 and the surface portion 22 of the core material 20 are adhered to one another via the adhesive layer 30 formed by the water glass, the moisture is removed from the dilution water glass, and the core material 20 is solidified.

Thus, the vacuum insulation panel 1 in which the metal plates 11 and 12 and the core material 20 are integrated is obtained.

In this way, according to the vacuum insulation panel 1 and the method for manufacturing the same according to the first embodiment, the inside surfaces of the hollow body 10 on one surface side of the panel and the other surface side and one surface side of the panel and the other surface side of the core material 20 are adhered to one another via the adhesive layer 30. Therefore, the one surface side of the panel of the hollow body 10, the core material 20, and the other surface side of the panel of the hollow body 10 are not independent but integrated. As a result, the wind pressure resistance performance equivalent to that of a single thick plate can be obtained. Accordingly, the wind pressure resistance performance can be improved.

Since the density of the core material 20 in the surface portion 22 is higher than the density in the central portion 21, it is possible to prevent a situation in which the adhesion between the inside surfaces of the hollow body 10 and the core material is insufficient due to the low density of the core material 20 in the surface portion 22.

Since the adhesive layer 30 is formed prior to adhesion, the adhesion is unlikely to be unstable, and more stable adhesion can be performed.

In order to seal the communication port 40 by the substance 50 having a melting point of 200°C or higher and 600°C or lower, the substance 50 that seals the communication port 40 is melted and the communication port 40 is opened at the time of fire. Accordingly, air is drawn into the hollow portion H at the time of fire, and it is possible to prevent a situation in which the vacuum insulation panel 1 greatly shrinks at the time of fire.

According to the method for manufacturing the vacuum insulation panel 1 according to the first embodiment, the water glass is charged into the hollow portion H of the hollow body 10 through the communication port 40, and the hollow body 10 is rotated. Therefore, after forming the hollow body 10, the adhesive layer 30 can be formed on the inside surfaces. Accordingly, it is not necessary to store the hollow body 10 in different parts in order to form the adhesive layer 30 on the inside surfaces of the hollow body 10, and the hollow body 10 having the hollow portion H can be formed in advance.

Further, moisture is released from the dilution water glass impregnated into the core material 20 by heating and solidification is performed, and adhesion is also performed by releasing moisture from the water glass. Therefore, the moisture can be released from both of the water glasses by heating, and solidification and adhesion are performed at the same time.

Next, a second embodiment according to the invention will be described. The vacuum insulation panel 1 and a method for manufacturing the same according to the second embodiment are similar to those of the first embodiment, but some configurations and methods are different. Differences from the first embodiment will be described below.

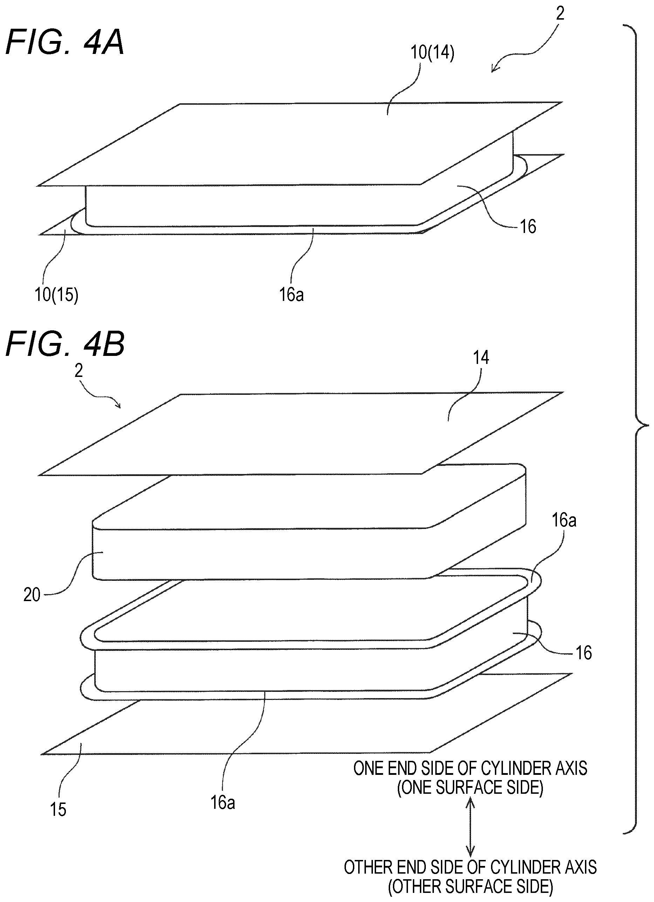

FIGS. 4A and 4B are a configuration diagram showing an example of the vacuum insulation panel according to the second embodiment, in which FIG. 4A is a perspective view and FIG. 4B is an exploded perspective view. As shown in FIGS. 4A and 4B, a vacuum insulation panel 2 according to the second embodiment includes two metal plates 14 and 15 made of stainless steel or the like, a cylindrical portion 16 made of stainless steel or the like and being of a substantially rectangular cylindrical shape, and the core material 20. The vacuum insulation panel 2 is formed by closing one end side and the other end side of the cylindrical portion 16 in a cylinder axis direction with two metal plates 14 and 15, respectively, in a state in which the core material 20 is accommodated in the cylinder of the cylindrical portion 16.

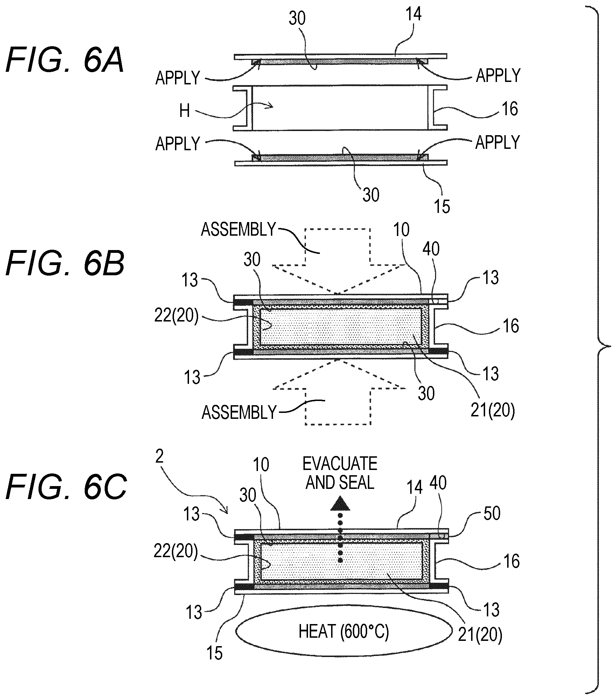

In the second embodiment, the cylindrical portion 16 has flanges 16a at one end and the other end in the cylinder axis direction, and the flanges 16a and the metal plates 14 and 15 are integrated via the joint portion 13 (see FIGS. 6A to 6C), that is, an outer periphery is sealed, except for a portion to be the communication port 40 (see FIGS. 6A to 6C). As in the first embodiment, the communication port 40 is sealed by the substance 50 (see FIGS. 6A to 6C) having a melting point of 200°C or higher and lower than 600°C.

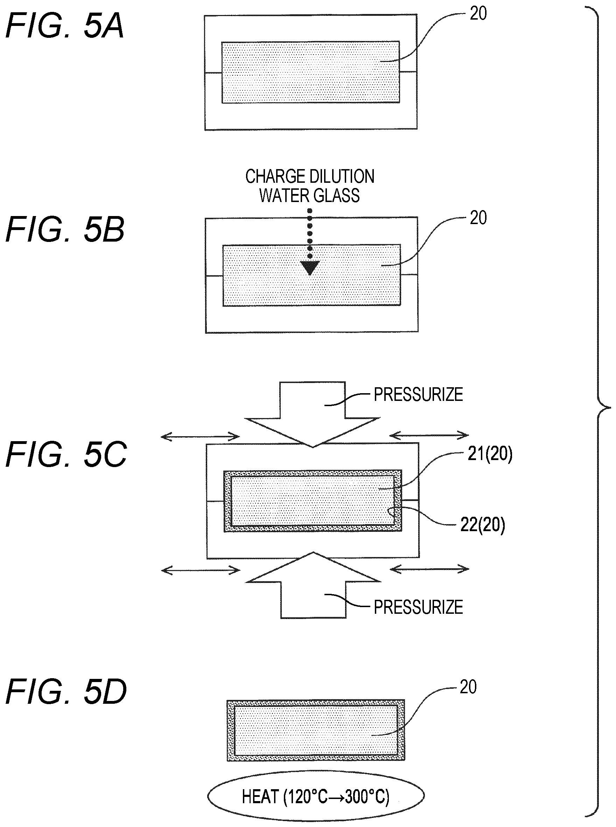

FIGS. 5A to 5D and FIGS. 6A to 6C are process diagrams showing a method for manufacturing the vacuum insulation panel 2 according to the second embodiment. FIG. 5A shows a preparing step, FIG. 5B shows an impregnating step, FIG. 5C shows an adhesive surface forming step, and FIG. 5D shows a heating step (solidifying step). FIG. 6A shows an adhesive layer forming step, FIG. 6B shows a hollow body forming step, and FIG. 6C shows a heating and evacuating step (adhering step, sealing step).

First, in the preparing step shown in FIG. 5A, the powder of the core material 20 is charged into a mold. Next, in the impregnating step shown in FIG. 5B, a dilution water glass diluted more than a water glass to be used in an adhesive layer forming step to be described later, for example, diluted 30 times, is charged into the mold, and the powder of the core material 20 is impregnated with the dilution water glass.

Next, in the adhesive surface forming step shown in FIG. 5C, the core material 20 impregnated with the dilution water glass is vibrated while the core material 20 is kept in the mold and pressurized. Accordingly, a part of the core material 20 that comes into contact with an inside surface of the mold is partially pulverized, the density of the core material 20 in the surface portion 22 is higher than that in the central portion 21, and the surface portion 22 is easily adhered.

Thereafter, in the heating step shown in FIG. 5D, the core material 20 is heated. In this step, the core material 20 is first heated at a first temperature for a first specified time, for example, one day, and then heated at a second temperature for a second specified time. The second specified time is shorter than the first specified time and is, for example, 8 hours. Here, in the second embodiment, since the core material 20 is exposed and steam can be released from the entire periphery, the heating time is shortened as compared with the first embodiment in which the steam is released from the communication port 40 (see FIG. 1A and the like). In particular, since the steam moves toward the communication port 40, the core material 20 according to the first embodiment tends to easily create a path for the steam toward the communication port 40 and is relatively easy to crack, but the core material 20 according to the second embodiment can release steam from the entire periphery, and is more difficult to crack.

Here, since the core material 20 shown in FIG. 5D is exposed without being covered with the metal plates 14 and 15, the core material 20 may be heated by being irradiated with microwaves by a large industrial magnetron or the like. By being irradiated with the microwaves, moisture can be sufficiently removed. Since some of the powder of the core material 20, such as perlite, absorb microwaves at a certain temperature, the core material 20 can be heated to, for example, 300°C.

Next, in the adhesive layer forming step shown in FIG. 6A, the adhesive layer 30 is formed. In this step, the water glass is applied to inside surfaces of the metal plates 14 and 15, that is, surfaces on a hollow portion H side. Next, in the hollow body forming step shown in FIG. 6B, the hollow body 10 accommodating the core material 20 is assembled.

Thereafter, in the heating and evacuating step shown in FIG. 6C, heating is performed at a third temperature for a third specified time, and evacuation is performed at the same time. The third temperature is higher than the second temperature and is, for example, 600°C. The third specified time is shorter than the second specified time and is, for example, 6 hours. After performing heating and evacuation, the communication port 40 is sealed by the substance 50 having a melting point of 200°C or higher and 600°C or lower.

Further, at the end of this step, the inside surfaces of the hollow body 10 on one surface side of the panel and the other surface side and the surface portion 22 of the core material 20 are adhered to one another via the adhesive layer 30 formed by the water glass, the moisture is removed from the dilution water glass, and the core material 20 is solidified.

Thus, the vacuum insulation panel 2 in which the metal plates 14 and 15 and the core material 20 are integrated is obtained.

Thus, according to the vacuum insulation panel 2 and a method for manufacturing the same according to the second embodiment, the same effects as those of the first embodiment can be obtained.

Furthermore, according to the method for manufacturing the vacuum insulation panel 2 according to the second embodiment, before the core material 20 is accommodated in the hollow portion H, moisture is released by heating, and the core material 20 is solidified. Therefore, it is not necessary to externally release moisture from a relatively small gap such as the communication port 40 of the hollow body 10, the moisture can be released from the entire periphery of the core material 20, and the core material 20 can be solidified in a relatively short time. By solidifying the core material 20 in advance, the moisture release time at the time of adhesion using the adhesive layer 30 can be shortened, and the manufacturing time can be shortened.

Next, a third embodiment according to the invention will be described. A vacuum insulation panel according to the third embodiment is the same as that according to the first embodiment, but manufacturing steps are different. Differences from the first embodiment will be described below.

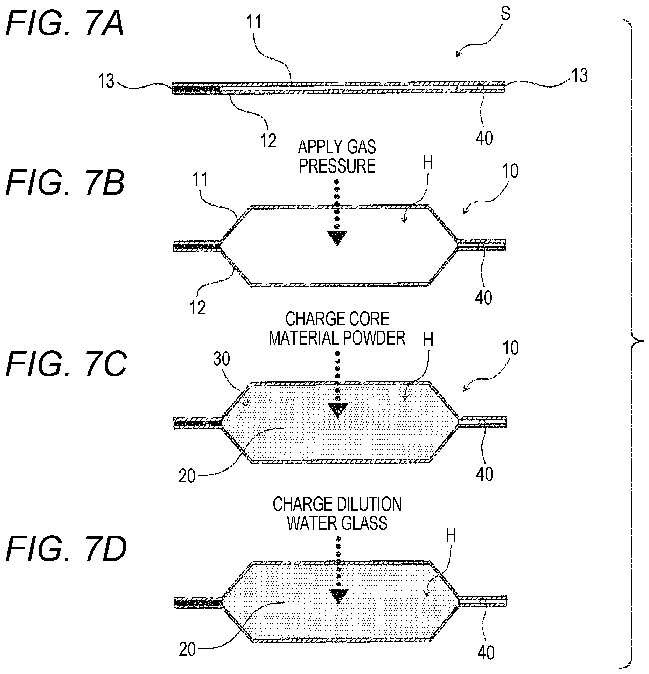

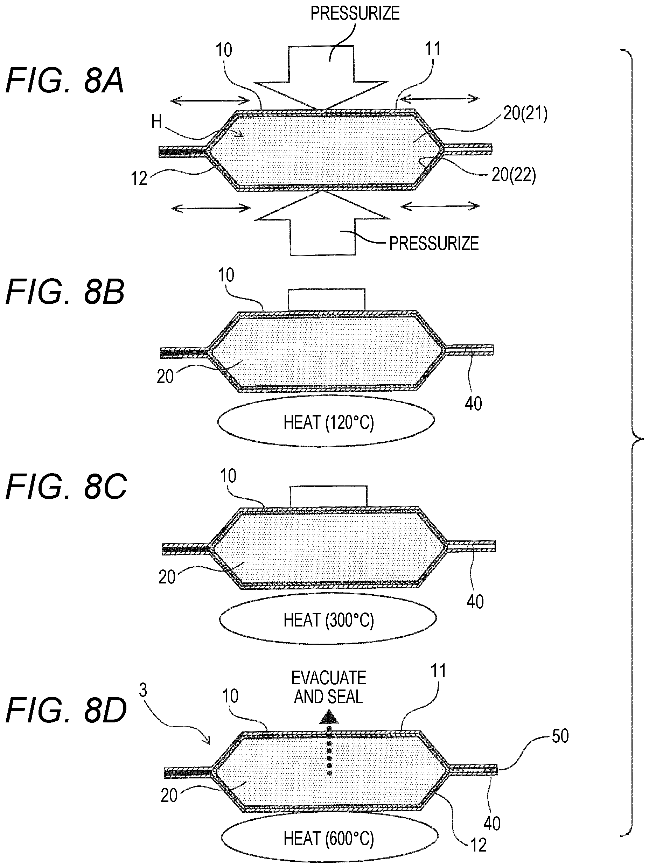

FIGS. 7A to 7D and FIGS. 8A to 8D are process diagrams showing a method for manufacturing the vacuum insulation panel according to the third embodiment. FIG. 7A shows a preparing step, FIG. 7B shows a hollow body manufacturing step (hollow body preparing step), FIG. 7C shows a core material charging step, and FIG. 7D shows an impregnating step. FIG. 8A shows an adhesive surface forming step, FIG. 8B shows a first heating step (adhering and solidifying step), FIG. 8C shows a second heating step (adhering and solidifying step), and FIG. 8D shows a heating and evacuating step (adhering and solidifying step, sealing step).

In a method for manufacturing a vacuum insulation panel 3 (see FIG. 8D) according to the third embodiment, first, as shown in FIGS. 7A and 7B, a preparing step and a hollow body manufacturing step are performed as in the first embodiment. Next, in the third embodiment, the adhesive layer forming step performed in the first embodiment is omitted, and as shown in FIG. 7C, the core material charging step is performed as in the first embodiment. Thereafter, as shown in FIG. 7D, the impregnating step is performed as in the first embodiment.

Thereafter, after the adhesive surface forming step is performed as shown in FIG. 8A as in the first embodiment, by a series of steps shown in FIGS. 8B to 8D, the core material 20 is solidified, adhesion is performed, and evacuation is performed and the communication port 40 is sealed.

Thus, according to the vacuum insulation panel 3 and the method for the same according to the third embodiment, the same effects as those of the first embodiment can be obtained.

Furthermore, according to the third embodiment, when the powder of the core material 20 is charged into the hollow portion H and moisture is released from the dilution water glass by heating, adhesion is performed, and the powder of the core material 20 is solidified. Therefore, a step of forming the adhesive layer 30 can be omitted, and the vacuum insulation panel 3 capable of improving the wind pressure resistance performance in a simpler step can be obtained.

Next, a fourth embodiment according to the invention will be described. A vacuum insulation panel according to the fourth embodiment is the same as that according to the first embodiment, but manufacturing steps are different. Differences from the first embodiment will be described below.

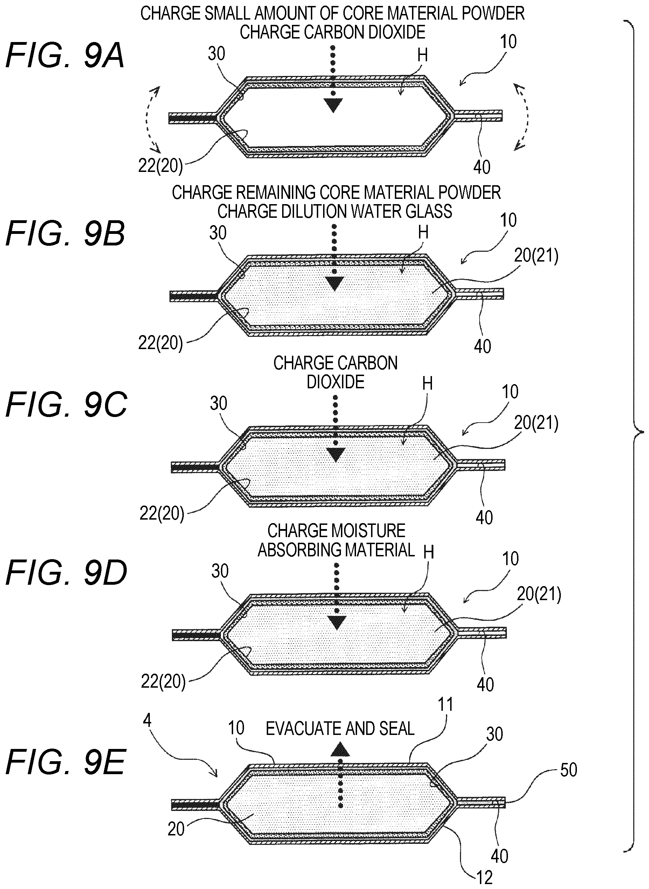

FIGS. 9A to 9E are a process diagram showing a method for manufacturing the vacuum insulation panel according to the fourth embodiment, in which FIG. 9A shows a partial charging step and an adhering step,

FIG. 9B shows a remaining charging step and an impregnating step, FIG. 9C shows a solidifying step, FIG. 9D shows a moisture absorbing material charging step, and FIG. 9E shows an evacuating step (sealing step).

First, in the fourth embodiment, as shown in FIGS. 2A to 2C, a preparing step, a hollow body manufacturing step, and an adhesive layer forming step are performed. Next, in the partial charging step shown in FIG. 9A, a part (for example, about 10% of the total amount) of the powder of the core material 20 is charged into the hollow portion H through the communication port 40. Thereafter, in the adhering step shown in FIG. 9A, the hollow body 10 is rotated in the same manner as the adhesive layer forming step shown in FIG. 2C, and carbon dioxide is charged into the hollow body 10 through the communication port 40. Accordingly, a water glass, which is the adhesive layer 30 formed by the adhesive layer forming step, reacts with the carbon dioxide and is solidified. At this time, since a part of the powder of the core material 20 is charged, the surface portion 22 having a high density is formed. Accordingly, the surface portion 22 of the core material 20 is adhered to inside surfaces of the hollow body 10 via the adhesive layer 30.

Next, in the remaining charging step shown in FIG. 9B, the remaining powder of the core material 20 is charged into the hollow portion H through the communication port 40. Next, in the impregnating step shown in FIG. 9B, a dilution water glass is charged into the hollow portion H through the communication port 40. Thus, the remaining powder of the core material 20 is impregnated with the dilution water glass.

Thereafter, in the solidifying step shown in FIG. 9C, carbon dioxide is charged into the hollow portion H through the communication port 40. Accordingly, a water glass component of the dilution water glass impregnated into the remaining powder of the core material 20 reacts with the carbon dioxide and is solidified.

Next, in the moisture absorbing material charging step shown in FIG. 9D, a moisture absorbing material such as calcium oxide is charged into the hollow portion H through the communication port 40. Here, in the method according to the fourth embodiment, since heating is not performed, moisture in the water glass or the dilution water glass is not released, and when a vacuum insulation panel 4 is used for a long period of time, an outgas may be generated to deteriorate the heat insulation property. Therefore, in the fourth embodiment, the moisture absorbing material is charged to prevent the deterioration of the heat insulation property due to the outgas.

Next, in the evacuating step shown in FIG. 9E, the inside of the hollow body 10 is evacuated by evacuation. Thereafter, the communication port 40 is sealed by the substance 50 having a melting point of 200°C or higher and 600°C or lower.

Thus, according to the vacuum insulation panel 4 and the method for manufacturing the same according to the fourth embodiment, the same effects as those of the first embodiment can be obtained.

A part of the powder of the core material 20 is charged, and carbon dioxide is charged while rotating the hollow body 10. Therefore, by optimizing an amount of the powder of the core material 20 to be charged, a density of the core material 20 in the surface portion 22 can be made higher than that in the central portion 21 in a final product state, and strong adhesion can be achieved while omitting the adhesive surface forming step.

After the remaining powder of the core material 20 is charged, the dilution water glass is impregnated, the carbon dioxide is charged, and the powder of the core material 20 is solidified. Therefore, the adhesion and solidification can be performed by charging the carbon dioxide a plurality of times. Accordingly, it is possible to contribute to manufacturing the vacuum insulation panel 4 in a shorter time without requiring a heating step for a long time as in the case of heating.

Although the invention has been described above based on the embodiments, the invention is not limited to the above embodiments, modifications may be made without departing from the gist of the invention, and techniques according to the embodiments and publicly known or well-known techniques may be appropriately combined within a possible range.

For example, in the above-described embodiments, the hollow body 10 includes the cylindrical portion 16 and the metal plates 11, 12, 14, and 15 made of stainless steel or the like, but the invention is not limited thereto, and the hollow body 10 may be formed of another material such as a glass material as long as the hollow body 10 has heat resistance. Further, the number of the metal plates 11, 12, 14, and 15 is not limited to two, and may be three or more.

Furthermore, in the first embodiment, the hollow body 10 is manufactured by applying the gas pressure to the plurality of metal plates 11 and 12, but the invention is not limited thereto, and the hollow body 10 may be formed by, for example, combining deep-drawn metal plates.

In addition, in the above embodiments, the core material 20 is solidified by impregnating the powder of the core material 20 with the dilution water glass and removing moisture, but the invention is not limited thereto, for example, the powder of the core material 20 may be pressed and solidified.

A foaming agent is not limited to being charged into the hollow portion H in a state in which the entire amount thereof is not foamed, and may be charged into the hollow portion H in a state in which a portion thereof is foamed, or may be charged into the hollow portion H in a state in which the entire amount thereof is foamed in the core material 20.

In the third embodiment, since not only the solidification of the core material 20 but also the adhesion is performed using the dilution water glass, the dilution water glass is not limited to be diluted 30 times, and may be used at a higher concentration such as diluted 10 times, or may be appropriately adjusted.

Further, in the fourth embodiment, the water glass component in the water glass and the dilution water glass is adhered and solidified by the reaction with the carbon dioxide, and is not adhered and solidified by heating, but the invention is not limited thereto, and an additional heat treatment may be performed from the viewpoint of preventing the generation of the outgas.

In addition, in the fourth embodiment, the surface portion 22 having a high density is obtained in the partial charging step and the adhering step shown in FIG. 9A. Further, for the purpose of increasing the density in the surface portion 22, the adhesive surface forming step shown in FIG. 3A may be added if possible.

Here, features of the embodiments of the method for manufacturing a vacuum insulation panel and the vacuum insulation panel according to the invention described above will be briefly summarized and listed in [1] to [15] below.
[1] A method for manufacturing a vacuum insulation panel (1) in which a foam having open cells is accommodated as a core material (20) in a hollow body (10) having a hollow portion (H) formed therein, in which
   the hollow body includes a first inner surface (11a) and a second inner surface (12a) that face each other with the hollow portion interposed therebetween,
   the core material includes a first surface (22a) facing the first inner surface and a second surface (22b) facing the second inner surface, and
   the method includes:
      an adhering step of adhering the first inner surface to the first surface, and adhering the second inner surface to the second surface.
[2] The method for manufacturing a vacuum insulation panel (1 to 4) according to [1], further including:
   an adhesive surface forming step of forming an adhesive surface by setting a density of the core material in the first surface and the second surface higher than a density of the core material in a central portion (21), prior to the adhering step.
[3] The method for manufacturing a vacuum insulation panel according to [1], further including:
   an adhesive layer forming step of forming an adhesive layer (30) on the first inner surface and the second inner surface, or the first surface and the second surface, prior to the adhering step, in which
   in the adhering step, the adhesive layer formed in the adhesive layer forming step is used to adhere the first inner surface to the first surface, and adhere the second inner surface to the second surface.
[4] The method for manufacturing a vacuum insulation panel according to [3], further including:
   a hollow body preparing step of preparing the hollow body including a communication port (40) through which the hollow portion is communicated with an outside, in which
   the adhesive layer forming step is a step of charging a liquid for forming the adhesive layer through the communication port into the hollow portion of the hollow body prepared in the hollow body preparing step, and rotating the hollow body.
[5] The method for manufacturing a vacuum insulation panel according to [4], further including:
   a core material charging step of charging a powder of the core material through the communication port into the hollow portion of the hollow body on which the adhesive layer is formed in the adhesive layer forming step; and
   an impregnating step of charging a dilution water glass, which is a diluted water glass, into the hollow portion through the communication port, and impregnating, with the dilution water glass, the powder of the core material charged in the core material charging step, in which
   the adhesive layer forming step is a step of charging the water glass as the liquid, and
   the adhering step is an adhering and solidifying step of releasing moisture from the water glass by heating to perform adhesion and solidifying the powder of the core material by releasing, by the heating, moisture from the dilution water glass impregnated into the powder of the core material.
[6] The method for manufacturing a vacuum insulation panel according to [1] or [2], further including:
   a hollow body preparing step of preparing the hollow body including a communication port through which the hollow portion is communicated with an outside;
   a core material charging step of charging a powder of the core material through the communication port into the hollow portion of the hollow body, prior to the adhering step; and
   an impregnating step of charging a dilution water glass, which is a diluted water glass, into the hollow portion through the communication port, and impregnating, with the dilution water glass, the powder of the core material charged in the core material charging step, in which
   the adhering step is an adhering and solidifying step of releasing moisture from the dilution water glass by heating to perform adhesion and solidifying the powder of the core material.
[7] The method for manufacturing a vacuum insulation panel according to [1] or [2], further including:
   a solidifying step of solidifying a powder of the core material as the core material by impregnating the powder of the core material with a dilution water glass, which is a diluted water glass, and heating the powder of the core material; and
   a hollow body forming step of forming the hollow body including a communication port (40) through which the hollow portion is communicated with an outside, and accommodating, in the hollow portion, the core material formed in the solidifying step at the time of forming the hollow body.
[8] The method for manufacturing a vacuum insulation panel according to [3], further including:
   a hollow body preparing step of preparing the hollow body including a communication port (40) through which the hollow portion is communicated with an outside; and
   a partial charging step of charging a part of a powder of the core material through the communication port into the hollow portion of the hollow body on which the adhesive layer is formed in the adhesive layer forming step, in which
   the adhering step is a step of rotating the hollow body and charging carbon dioxide into the hollow portion.
[9] The method for manufacturing a vacuum insulation panel according to [8], further including:
   a remaining charging step of charging a remaining powder of the core material through the communication port into the hollow portion of the hollow body after the adhering step;
   an impregnating step of charging a dilution water glass, which is a diluted water glass, through the communication port into the hollow portion into which the remaining powder of the core material is charged in the remaining charging step, and impregnating the remaining powder of the core material with the dilution water glass; and
   a solidifying step of charging carbon dioxide into the hollow portion through the communication port after the impregnating step, and solidifying the remaining powder of the core material impregnated with the dilution water glass.
[10] The method for manufacturing a vacuum insulation panel according to [4], [5], [8], and [9], further including:
   a sealing step of sealing the communication port with a substance having a melting point of 200°C or higher and 600°C or lower.
[11] The method for manufacturing a vacuum insulation panel according to [6], further including:
   a sealing step of sealing the communication port with a substance having a melting point of 200°C or higher and 600°C or lower.
[12] The method for manufacturing a vacuum insulation panel according to [7], further including:
   a sealing step of sealing the communication port with a substance having a melting point of 200°C or higher and 600°C or lower.
[13] A vacuum insulation panel (1 to 4) in which a foam having open cells is accommodated as a core material (20) in a hollow body (10) having a hollow portion (H) formed therein, in which
   the hollow body includes a first inner surface (11a) and a second inner surface(12a) that face each other with the hollow portion interposed therebetween,
   the core material includes a first surface (22a) facing the first inner surface and a second surface (22b) facing the second inner surface, and
   the first inner surface is adhered to the first surface, and the second inner surface is adhered to the second surface.
[14] The vacuum insulation panel according to [13], in which
   a density of the core material in the first surface and the second surface is higher than a density of the core material in a central portion (21).
[15] The vacuum insulation panel according to [13] or [14], in which
   the hollow body includes a communication port (40) through which the hollow portion is communicated with an outside, and a substance that seals the communication port and has a melting point of 200°C or higher and 600°C or lower.

The present application is based on, and claims priority from a Japanese patent application (Japanese Patent Application No. 2021-099209), filed on June 15, 2021, the disclosure of which is hereby incorporated by reference.

### INDUSTRIAL APPLICABILITY

According to the invention, it is possible to provide a method for manufacturing a vacuum insulation panel and a vacuum insulation panel that can improve a wind pressure resistance performance. The invention having this effect is useful for a method for manufacturing a vacuum insulation panel and a vacuum insulation panel.

### REFERENCE SIGNS LIST

1 to 4: vacuum insulation panel
10: hollow body
11, 12, 14, 15: metal plate
13: joint portion
16: cylindrical portion
16a: flange
20: core material
21: central portion
22: surface portion
30: adhesive layer
40: communication port
50: substance
H: hollow portion
S: stacked body

## Claims

1. A method for manufacturing a vacuum insulation panel in which a foam having open cells is accommodated as a core material in a hollow body having a hollow portion formed inside the hollow body, wherein
the hollow body includes a first inner surface and a second inner surface that face each other with the hollow portion interposed between the first inner surface and the second inner surface,
the core material includes a first surface facing the first inner surface and a second surface facing the second inner surface, and
the method comprises:
an adhering step of adhering the first inner surface to the first surface, and adhering the second inner surface to the second surface.

2. The method for manufacturing the vacuum insulation panel according to claim 1, further comprising:
an adhesive surface forming step of forming an adhesive surface by setting a density of the core material in the first surface and the second surface higher than a density of the core material in a central portion, prior to the adhering step.

3. The method for manufacturing the vacuum insulation panel according to claim 1, further comprising:
an adhesive layer forming step of forming an adhesive layer on the first inner surface and the second inner surface, or the first surface and the second surface, prior to the adhering step, wherein
the adhering step includes using the adhesive layer formed in the adhesive layer forming step to adhere the first inner surface to the first surface, and to adhere the second inner surface to the second surface.

4. The method for manufacturing the vacuum insulation panel according to claim 3, further comprising:
a hollow body preparing step of preparing the hollow body including a communication port through which the hollow portion is communicated with an outside, wherein
the adhesive layer forming step includes charging a liquid for forming the adhesive layer through the communication port into the hollow portion of the hollow body prepared in the hollow body preparing step, and rotating the hollow body.

5. The method for manufacturing the vacuum insulation panel according to claim 4, further comprising:
a core material charging step of charging a powder of the core material through the communication port into the hollow portion of the hollow body on which the adhesive layer is formed in the adhesive layer forming step; and
an impregnating step of charging a dilution water glass, which is a diluted water glass, into the hollow portion through the communication port, and impregnating the powder of the core material charged in the core material charging step with the dilution water glass, wherein
the adhesive layer forming step includes charging the water glass as the liquid, and
the adhering step includes an adhering and solidifying step of releasing moisture from the water glass by heating to perform adhesion and releasing moisture from the dilution water glass impregnated into the powder of the core material by the heating to solidify the powder of the core material.

6. The method for manufacturing the vacuum insulation panel according to claim 1 or 2, further comprising:
a hollow body preparing step of preparing the hollow body including a communication port through which the hollow portion is communicated with an outside;
a core material charging step of charging a powder of the core material through the communication port into the hollow portion of the hollow body, prior to the adhering step; and
an impregnating step of charging a dilution water glass, which is a diluted water glass, into the hollow portion through the communication port, and impregnating the powder of the core material charged in the core material charging step with the dilution water glass, wherein
the adhering step includes an adhering and solidifying step of releasing moisture from the dilution water glass by heating to perform adhesion and solidifying the powder of the core material.

7. The method for manufacturing the vacuum insulation panel according to claim 1 or 2, further comprising:
a solidifying step of solidifying a powder of the core material as the core material by impregnating the powder of the core material with a dilution water glass, which is a diluted water glass, and by heating the powder of the core material; and
a hollow body forming step of forming the hollow body including a communication port through which the hollow portion is communicated with an outside, and accommodating the core material formed in the solidifying step in the hollow portion when forming the hollow body.

8. The method for manufacturing the vacuum insulation panel according to claim 3, further comprising:
a hollow body preparing step of preparing the hollow body including a communication port through which the hollow portion is communicated with an outside; and
a partial charging step of charging a part of a powder of the core material through the communication port into the hollow portion of the hollow body on which the adhesive layer is formed in the adhesive layer forming step, wherein
the adhering step includes rotating the hollow body and charging carbon dioxide into the hollow portion.

9. The method for manufacturing the vacuum insulation panel according to claim 8, further comprising:
a remaining charging step of charging a remaining powder of the core material through the communication port into the hollow portion of the hollow body after the adhering step;
an impregnating step of charging a dilution water glass, which is a diluted water glass, through the communication port into the hollow portion into which the remaining powder of the core material is charged in the remaining charging step, and impregnating the remaining powder of the core material with the dilution water glass, and
a solidifying step of charging carbon dioxide into the hollow portion through the communication port after the impregnating step, and solidifying the remaining powder of the core material impregnated with the dilution water glass.

10. The method for manufacturing the vacuum insulation panel according to any one of claims 4, 5, 8, and 9, further comprising:
a sealing step of sealing the communication port with a substance having a melting point of 200°C or higher and 600°C or lower.

11. The method for manufacturing the vacuum insulation panel according to claim 6, further comprising:
a sealing step of sealing the communication port with a substance having a melting point of 200°C or higher and 600°C or lower.

12. The method for manufacturing the vacuum insulation panel according to claim 7, further comprising:
a sealing step of sealing the communication port with a substance having a melting point of 200°C or higher and 600°C or lower.

13. A vacuum insulation panel in which a foam having open cells is accommodated as a core material in a hollow body having a hollow portion formed inside the hollow body, wherein
the hollow body includes a first inner surface and a second inner surface that face each other with the hollow portion interposed between the first inner surface and the second inner surface,
the core material includes a first surface facing the first inner surface and a second surface facing the second inner surface, and
the first inner surface is adhered to the first surface, and the second inner surface is adhered to the second surface.

14. The vacuum insulation panel according to claim 13, wherein
a density of the core material in the first surface and the second surface is higher than a density of the core material in a central portion.

15. The vacuum insulation panel according to claim 13 or 14, wherein
the hollow body includes a communication port through which the hollow portion is communicated with an outside, and a substance that seals the communication port and has a melting point of 200°C or higher and 600°C or lower.
